# FASCICULE DE BREVET EUROPEEN

(11) **EP 4 371 291 B1**
(45) Date de publication et mention de la délivrance du brevet: **21.05.2025**
(21) Numéro de dépôt: 22750672.2
(22) Date de dépôt: 08.07.2022
(51) Int. Cl.: H04L 67/141, H04L 51/10, H04L 65/1059, H04L 65/1069, H04M 1/724, H04N 7/14, H04N 7/15, H04L 12/18, H04L 51/222, H04L 67/02, H04W 4/02, H04W 4/90

(54) **PROCÉDÉ D'ÉTABLISSEMENT DE COMMUNICATION RENFORCÉE ENTRE DEUX DISPOSITIFS**
VERFAHREN ZUR HERSTELLUNG EINER VERSTÄRKTEN KOMMUNIKATION ZWISCHEN ZWEI VORRICHTUNGEN
METHOD FOR ESTABLISHING REINFORCED COMMUNICATION BETWEEN TWO DEVICES

(30) Priorité: 13.07.2021 FR 2107617
(43) Date de publication de la demande: 22.05.2024
(73) Titulaire: Daumont, Romain, 75011 Paris (FR)
(72) Inventeur: Daumont, Romain, 75011 Paris (FR)
(74) Mandataire: Cabinet Camus Lebkiri
(86) Numéro de dépôt international: PCT/EP2022/069128
(87) Numéro de publication internationale: WO 2023/285312

(56) Documents cités:
- US-A1- 2015 134 959

## Description

### DOMAINE TECHNIQUE DE L'INVENTION

Le domaine technique de l'invention est celui des télécommunications.

La présente invention concerne un procédé d'établissement de communication entre deux dispositifs.

Dans l'invention les deux dispositifs ont vocation à être utilisés par des utilisateurs. L'invention concerne donc aussi l'établissement d'une communication entre utilisateurs intermédiée par des dispositifs.

### ARRIERE-PLAN TECHNOLOGIQUE DE L'INVENTION

Dans l'état de la technique, il existe de nombreux dispositifs pour établir une communication entre deux dispositifs. Une communication est établie pour des besoins divers qui couvrent tous les aspects de la vie, qu'il s'agisse de loisirs ou d'activités professionnelles. Force est de constater que le moyen le plus commun d'établir une communication intermédiée entre deux utilisateurs est d'utiliser un téléphone mobile, aussi appelé téléphone intelligent ou smartphone. En période de limitation de déplacement, comme pendant une pandémie, le télétravail se généralise et d'autres moyens permettant la visio-conférence sont utilisés. Ces autres moyens sont au moins les tablettes et les ordinateurs.

Tous ces moyens ont été pensés et adaptés pour des communications verbales, c'est-à-dire pour transmettre la voix, et dans une moindre mesure, non uniquement verbales quand on ajoute la vidéo à l'audio. Ces moyens permettent de reproduire, malgré la distance, une ambiance de communication interhumaine que l'on voudrait le plus proche possible d'une réelle interaction de visu, autrement dit d'une communication non intermédiée.

Cela suffit dans la plupart des cas où la voix est suffisante pour transmettre l'information que les utilisateurs souhaitent échanger. Cependant il est des situations où la voix n'est pas disponible ou inadaptée pour la transmission des informations pertinentes.

Parmi ces situations, on pense par exemple aux accidents privant leurs victimes de la parole. Il existe des dispositifs permettant de localiser un individu disparu, par exemple sous une avalanche de neige. Dans ce cas, un premier dispositif dit émetteur appartenant à une personne ensevelie émet un signal d'une fréquence particulière détectée par un deuxième dispositif dit récepteur sur un intervalle de distances autour du dispositif de la personne disparue, afin de pouvoir la secourir à temps.

Plus généralement, il existe des dispositifs tels que les téléphones portables, utilisés quotidiennement, permettant de localiser leurs utilisateurs. Ainsi lorsqu'un tel utilisateur est porté disparu, ou se trouve en situation de danger, on peut obtenir sa localisation grâce à son téléphone portable. Cependant, localiser un utilisateur ne permet pas de savoir si ce dernier est encore en vie. Il se peut que l'utilisateur puisse bouger uniquement certains membres sans pouvoir ni parler ni appeler à l'aide et/ou que le dispositif et son utilisateur soient éloignés d'une distance significative. Dans un tel cas on sauve le dispositif mais pas l'utilisateur et ce en partie parce que l'on a cessé de chercher l'utilisateur en considérant qu'il était avec son dispositif. C'est actuellement le mieux que l'on puisse faire en termes de localisation. Il existe donc le besoin de savoir si une personne montre encore des signes de vie même dans un état critique. Autrement dit il existe un besoin de qualifier une localisation.

Sans aller jusqu'à des situations aussi dramatiques, il est des situations dans lesquelles il peut être souhaitable de pouvoir mesurer l'attention et/ou la réactivité d'un interlocuteur. De telles situations sont, par exemple :
- Une situation d'apprentissage dans laquelle un enseignant souhaite connaitre un degré de disponibilité d'un ou plusieurs élèves, par exemple pour faire une pause ou approfondir un sujet ;
- Une situation de télé diagnostic dans laquelle un médecin souhaite mesurer les facultés cognitives d'un patient, par exemple pour déterminer si le patient est en train de faire un malaise ;
- Une conversation normale dans laquelle les interlocuteurs souhaitent évaluer leur niveau d'investissement.

Dans le cas d'une conversation normale, il existe aujourd'hui majoritairement des applications permettant d'établir une communication instantanée. Bien qu'avantageuses pour communiquer rapidement, ces applications n'impliquent pas d'attention prolongée de la part des utilisateurs pour communiquer ni de consentement pour établir une communication. Par exemple, dès qu'un premier utilisateur envoie, via un dispositif, un message, celui-ci est directement reçu par un ou plusieurs autres dispositifs, sans autorisation préalable du ou de leurs utilisateurs. Cela peut être perçu comme intrusif et engendrer une pollution visuelle et/ou sonore. Il existe un besoin d'établir des communications volontaires et réciproques nécessitant un niveau de consentement plus important que pour une pour le cas précédemment décrit.

Dans l'état de la technique il n'existe aucune solution autre que le recours à une communication vocale.

Le document US 2015/134959 A1 (WONG KWOK FONG [CN] ET AL) 14 mai 2015 (2015-05-14) fait partie de l'état de l'art pertinent.

### RESUME DE L'INVENTION

L'invention offre une solution aux problèmes évoqués précédemment.

Un aspect de l'invention concerne ainsi un procédé selon la revendication indépendante 1.

Avantageusement, l'invention permet de mettre en place une communication renforcée. On appelle communication renforcée entre deux dispositifs toute communication nécessitant des étapes supplémentaires par rapport à une communication classique entre deux dispositifs. Dans une communication classique on considère que la communication est établie lorsque les parties à la communication deviennent apte à échanger des informations, qu'elles le fassent ou non. Par exemple dans le cas d'une conversation vocale, la voix étant un type de données parmi d'autres, la communication est établie dès le décroché de la partie appelée. Dans l'invention on ajoute des étapes qui permettent de garantir la disponibilité des parties pour la réception des informations échangées. Cette disponibilité peut être interprétée comme l'aptitude à recevoir et à comprendre un message qui peut être transmis avec un taux de réception conforme amélioré via une communication renforcée selon l'invention.

Concernant la notion de continuité, on entend par "en continu" le fait que des mesures sont effectuées selon un intervalle de temps appelé intervalle de rafraichissement. Un tel intervalle est de l'ordre de la milliseconde ou de quelques secondes au maximum. Dans l'exemple d'un schéma basé sur la pression d'un doigt sur l'écran cela revient à mesurer la pression du doigt sur l'écran à une fréquence qui est l'inverse de l'intervalle de rafraichissement.

Ainsi, un utilisateur doit faire preuve d'une attention plus importante que pour une communication instantanée, permettant ainsi de prouver qu'il est en vie par exemple ou simplement s'investir dans une discussion normale entre deux interlocuteurs.

Selon un mode de réalisation l'établissement de communication entre les deux dispositifs est interrompu si le schéma prédéterminé est interrompu.

Selon un autre mode de réalisation, l'établissement de communication entre les deux dispositifs est interrompu si le schéma prédéterminé est interrompu pendant une durée prédéterminée dite durée d'interruption. Une durée prédéterminée est une donnée de configuration qui est par exemple : codée en dur dans l'application, lue via un fichier de configuration, saisie via une interface de configuration, ou obtenue via une requête.

En outre, selon un mode de réalisation, si la durée de l'interruption du schéma est inférieure à la durée dite d'interruption alors l'établissement de la communication reprend.

Selon un mode de réalisation, lorsque la communication renforcée est établie l'utilisateur du premier dispositif de communication transmet des données parmi le type formé d'au moins un des types suivants : image, texte, son.

Selon un mode de réalisation l'acquisition, la transmission et la restitution des données non audio sont effectuées par les deux dispositifs et en ce que la communication renforcée est considérée comme établie si l'évolution des données non audio reçues par les deux dispositifs correspond au schéma prédéterminé pendant la durée d'établissement.

Selon un mode de réalisation, les données acquises en continu sont d'un type appartenant à l'ensemble comprenant les éléments suivants :
- Données vidéos, le schéma prédéterminé correspondant à un mouvement anatomique;
- Données issues d'un accéléromètre, le schéma prédéterminé correspondant à un déplacement d'un dispositif suivant au moins un axe défini;
- Données relatives à un contact sur un écran compris dans l'un quelconque des deux dispositifs et le schéma prédéfini étant une évolution du contact, l'évolution se mesurant en pression et/ou localisation.

Selon un mode de réalisation, le canal d'échange de données bidirectionnel entre le premier dispositif et le deuxième dispositif est établi via un troisième dispositif.

Selon un mode de réalisation, la durée d'établissement est comprise dans l'intervalle dix à soixante secondes.

Selon un mode de réalisation avantageux, la communication entre les deux dispositifs est établie à travers le réseau internet. Ce mode de réalisation permet à deux dispositifs de rentrer en communication grâce à différents standards de téléphonie mobile tels que les standards 3G, 4G ou grâce au protocole de communication de longue portée et bas débit Lora à partir de n'importe quel lieu et donc de savoir si un utilisateur peut donner un signe de vie même en étant très éloigné de cet utilisateur.

Selon un mode de réalisation avantageux le canal d'échange de données bidirectionnel entre le premier dispositif et le deuxième dispositif est établi selon le protocole applicatif WebSocket^{®}. Ainsi, un dispositif peut recevoir des données à partir d'un serveur ou d'un autre dispositif sans faire de requêtes. Cela renforce l'efficacité de l'échange de donnée tant au niveau de l'utilisation de la bande passante qu'au niveau de l'interactivité : la donnée est échangée dès qu'elle est disponible et seulement quand elle est disponible.

Selon un mode de réalisation avantageux, la communication entre le premier dispositif et le deuxième dispositif est établie grâce au protocole de transfert hypertextuel sécurisé. Ce mode de réalisation permet d'établir une communication sécurisée et de ne pas être limité par les pares-feux.

En outre, l'invention comprend un système comprenant au moins un premier dispositif et un deuxième dispositif configurés pour mettre en œuvre le procédé cité précédemment.

Selon un mode de réalisation, le système comprend un troisième dispositif configuré pour établir le canal bidirectionnel entre le premier dispositif et le deuxième dispositif.

Un autre aspect de l'invention concerne un produit-programme d'ordinateur comprenant des instructions qui, lorsque le programme est exécuté par un ordinateur, conduisent celui-ci à mettre en œuvre les étapes du procédé cité précédemment.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- [Fig. 1] montre un système mettant en œuvre une communication renforcée selon l'invention entre deux dispositifs
- [Fig. 2] montre un schéma synoptique d'un procédé permettant de mettre en œuvre une communication renforcée selon l'invention entre deux dispositifs

### DESCRIPTION DETAILLEE

Les figures sont présentées à titre indicatif et nullement limitatif de l'invention.

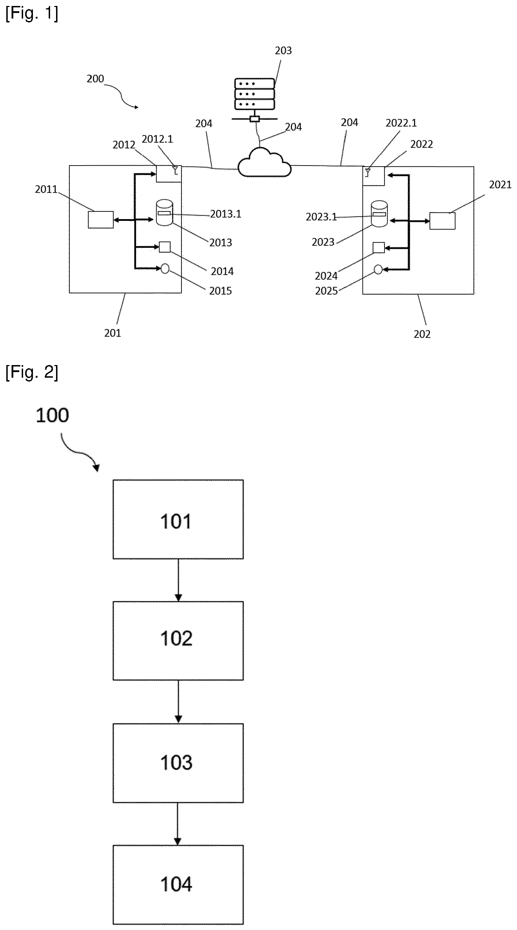

La figure 1 [fig. 1] représente un système 200 permettant d'établir une communication renforcée entre deux dispositifs 201 et 202.

On appelle communication renforcée entre deux dispositifs toute communication nécessitant des étapes supplémentaires par rapport à une communication classique entre deux dispositifs. Dans une communication classique on considère que la communication est établie lorsque les parties à la communication deviennent apte à échanger des informations, qu'elles le fassent ou non. Par exemple dans le cas d'une conversation vocale, la voix étant un type de données parmi d'autres, la communication est considérée comme établie dès le décroché de la partie appelée. Dans l'invention on ajoute des étapes qui permettent de garantir la disponibilité des parties pour la réception des informations échangées.

Le système 200 comporte deux dispositifs :
- Un premier dispositif 201 mobile utilisé par un premier utilisateur non représenté ;
- Un deuxième dispositif 202 mobile utilisé par un deuxième utilisateur non représenté ;
Et peut comporter un troisième dispositif 203, par exemple un serveur.

Selon un mode de réalisation, le système 200 comprend une pluralité de dispositifs mobiles utilisés chacun par un utilisateur. La pluralité de dispositifs mobile comprend un nombre N de dispositifs mobiles, N étant supérieur ou égal à 3. Par exemple, N est compris dans l'intervalle [3 ; 10000]. Par exemple N est égal à 1000, 2000, 3000, 4000, 5000 ou 10000.

Les dispositifs 201 et 202 comportent respectivement chacun au moins :
- Une interface réseau, respectivement 2012 et 2022, comportant une antenne, respectivement 2012.1 et 2022.1;
- Une mémoire, respectivement 2013 et 2023
- Un microprocesseur, respectivement 2011 et 2021
- Des moyens d'acquisition et restitution des données à transmettre.

Selon les variantes de l'invention les moyens d'acquisition de données sont
- Un écran tactile ;
- Un ou plusieurs boutons poussoirs ;
- Une caméra, respectivement 2015 et 2025 et/ou
- Un accéléromètre, respectivement 2014 et 2024 ;

Par accéléromètre on entend ici un capteur qui est fixé à un dispositif et qui permet de mesurer l'accélération non gravitationnelle linéaire de ce dispositif. Dans la pratique on parle d'un accéléromètre même lorsqu'il s'agit en fait de trois capteurs qui mesurent les accélérations linéaires selon trois axes orthogonaux.

La figure 1 montre que chaque mémoire de stockage, respectivement 2013 et 2023, de chaque dispositif, respectivement 201 et 202, comporte au moins une zone, respectivement 2313.1 et 2023.1, de code instruction correspondant à la mise en œuvre du procédé selon l'invention.

Selon les variantes de l'invention, les moyens de de restitution des données sont une ou plusieurs diodes de couleurs ou de préférence un écran.

Les premier et deuxième et dispositifs 201 et 202 peuvent chacun être, indépendamment l'un de l'autre :
- Un ordinateur ;
- Un bippeur ;
- Une tablette ; où
- Un téléphone mobile, de type smartphone par exemple

Le serveur 203 permet d'établir un canal d'échange bidirectionnel entre le premier et deuxième dispositifs 201 et 202. Le serveur 203 joue alors un rôle intermédiaire entre le premier et deuxième dispositifs mobiles.

Dans un autre mode de réalisation, le système 200 ne comprend que le premier dispositif 201 et le deuxième dispositif 202.

La figure 2 [Fig. 2] montre une représentation synoptique d'un procédé 100 d'établissement communication dite renforcée entre au moins deux utilisateurs, utilisant chacun respectivement un premier dispositif 201 et un deuxième dispositif 202. Le procédé de communication renforcée entre deux dispositifs 201 et 202 comprend plusieurs étapes. Une première étape consiste en l'établissement 101 d'un canal d'échange bidirectionnel entre le premier dispositif 201 et le deuxième dispositif 202.

Dans une variante préférée ce canal de communication est établi via le serveur 203 et à travers le réseau internet.

Pour se connecter au réseau internet, chacun des deux dispositifs 201 et 202 comprend, indépendamment de l'autre, une interface réseau filaire ou sans fil : lorsqu'un dispositif comprend une interface filaire, celui-ci se connecte au réseau internet via le protocole Ethernet préférentiellement. Lorsqu'un dispositif comprend une interface non filaire, celui-ci peut se connecter au réseau internet via les standards 3G, 4G, Wifi^{®} ou Lora par exemple. L'établissement d'une connexion à travers un réseau internet permet avantageusement de connecter deux dispositifs à partir de n'importe quel lieu et n'importe quelle distance entre les deux dispositifs.

Lorsque les dispositifs sont connectés à travers le réseau internet, le canal d'échange bidirectionnel est établi de préférence grâce au protocole WebSocket^{®} au niveau de la couche application associé au protocole de transfert hypertextuel sécurisé (dit "https" en anglais). L'utilisation du protocole transfert hypertextuel sécurisé permet de sécuriser les échanges entre les deux dispositifs 201 et 202. Cette utilisation permet aussi aux données transmises entre les deux dispositifs de ne pas être bloquées par des règles de filtrage. En effet il s'agit de protocoles usuels bien acceptés par les réseaux.

L'invention peut être mise en œuvre en utilisant simplement http ou https. Dans ce cas l'échange de données à partir d'un serveur vers un dispositif se fait en mode « tirer » (mode dit pull en anglais) durant lequel un dispositif envoie des requêtes à un serveur pour recevoir des nouvelles données.

Le protocole WebSocket^{®} permet, dans un mode de réalisation préféré, de fonctionner en mode "pousser" (mode dit "push" en anglais) dans lequel un dispositif reçoit des données d'un serveur sans que le dispositif envoie de requêtes pour obtenir ces données.

Dans une autre mode de réalisation, le canal d'échange bidirectionnel entre les dispositifs 201 et 202 est établi grâce au standard de communication Bluetooth^{®} lorsque les deux dispositifs 201 et 202 sont situés à moins de 100 m et ou ne peuvent pas communiquer à travers un réseau internet.

Dans encore un autre mode de réalisation les dispositifs mobiles sont configurés pour se comporter comme des serveurs l'un pour l'autre et peuvent donc échanger directement via internet.

Une deuxième étape du procédé consiste, pour au moins le premier dispositif 201 mobile, en l'acquisition 102 en continu de données 204 relatives à une action du premier utilisateur. Les données 204 sont des données non audios par exemple des données vidéos sans son, des données issues d'un accéléromètre compris dans le premier dispositif 201 mobile, ou des données relatives à un contact sur un écran compris dans le dispositif 201. Concernant la notion de continuité, on entend par "en continu" le fait que des mesures sont effectuées selon un intervalle de temps appelé intervalle de rafraichissement. Un tel intervalle est de l'ordre de la milliseconde ou de quelques secondes au maximum. Dans l'exemple d'un schéma basé sur la pression d'un doigt sur l'écran cela revient à mesurer la pression du doigt sur l'écran à une fréquence qui est l'inverse de l'intervalle de rafraichissement

Des exemples d'action utilisateurs sont :
- Le mouvement d'une rétine, il s'agit dans ce cas de données vidéos;
- Le mouvement du dispositif, il s'agit dans ce cas de données de l'accéléromètre.
- Le mouvement d'un doigt sur l'écran, il s'agit de ce cas de données de pression. ;

Une troisième étape du procédé consiste en la transmission 103 en continu des données 204 acquises par le premier dispositif 201 au deuxième dispositif 202. La transmission peut être indirecte avec le serveur 203 comme intermédiaire entre les deux dispositifs ou directe entre les deux dispositifs sans intermédiaire.

Une quatrième étape consiste en la restitution 104 au deuxième utilisateur des données 204 transmises par le deuxième dispositif en fonction de l'évolution des données non audio 204. Selon un mode de réalisation, la communication est considérée comme établie si l'évolution des données 204 restituées au deuxième utilisateur correspond à un schéma prédéterminé pendant une durée prédéterminée. Le schéma prédéterminé résulte d'une action du premier utilisateur du premier dispositif 201 et peut comprendre au moins un type de données parmi les données suivantes :
- Des données vidéos dans lesquelles le premier utilisateur réalise un mouvement suivant des instructions prédéterminées comprises dans une zone 2013.1 de la mémoire 2013 du dispositif 201 ou dans la mémoire du serveur 203. Un tel schéma est qualifié de schéma anatomique.
- Une variation des données issues l'accéléromètre résultant d'une mise en mouvement du premier dispositif 201 suivant un axe prédéterminé par des instructions comprises dans une zone 2013.1 de la mémoire 2013 du dispositif 201 ou dans la mémoire du serveur 203. Cette variation dure pendant une durée prédéterminée dite durée d'établissement supérieure ou égale à 10 secondes et, par exemple, inférieure à 60 secondes, qui vaut de préférence 30 secondes ;
- Un maintien d'une pression sur un écran tactile du dispositif 201 ou sur tout autre composant pouvant détecter une pression, pendant une durée prédéterminée, supérieure ou égale à 10 secondes et, de préférence, inférieure à 60 secondes.
   Ce schéma prédéterminé permet à un utilisateur dans un état critique par exemple ou dans l'incapacité de parler et/ou de voir de donner un signe de vie à un autre utilisateur.
- Un changement de position du doigt sur l'écran suivant des instructions prédéterminées comprises dans une zone 2013.1 de la mémoire 2013 du dispositif 201 ou dans la mémoire du serveur 203 ; pendant une durée prédéterminée dite durée d'établissement supérieure ou égale à 10 secondes et, par exemple, inférieure à 60 secondes, qui vaut de préférence 30 secondes. Dans une variante le schéma peut être pousser par l'utilisateur de l'autre dispositif, le but étant alors de reproduire les mouvements qui apparaissent sur l'écran.

Selon un mode de réalisation, l'établissement d'une communication entre les deux dispositifs 201 et 202 est considérée comme rompue dès que l'utilisateur du dispositif 201 interrompt le schéma prédéterminé. Dans ce cas, l'établissement d'une nouvelle communication entre les deux dispositifs 201 et 202 nécessite de réitérer les étapes 101 à 104. Une interruption du schéma est, par exemple, le fait que l'un des deux utilisateurs enlève son doigt de l'écran, ferme les yeux, ne met plus le dispositif en mouvement, ou déplace le dispositif de manière non conforme au schéma.

Selon un autre mode de réalisation, l'établissement d'une communication entre les deux dispositifs 201 et 202 est considérée comme rompue dès que l'utilisateur du dispositif 201 interrompt le schéma prédéterminé pendant une durée supérieure à une durée prédéterminée dite durée d'interruption, de préférence comprise entre 500 millisecondes et 3 secondes.

Selon encore un autre mode de réalisation, le schéma prédéterminé se divise en deux étapes :
- Une première étape, dont la durée D1 est comprise entre 3 secondes et 6 secondes et de préférence égale à 6 secondes, durant laquelle les données non audio 204 reçues par le dispositif 202 sont restituées entièrement à l'utilisateur sans traitement particulier ;
- Puis une seconde étape dont la durée D2 est comprise entre 7 secondes et 54 secondes et vaut de préférence 24 secondes, durant laquelle le dispositif 202 qui reçoit les données non audio 204 filtre les données pour n'en restituer qu'une partie à l'utilisateur dudit dispositif. Par exemple, si les données non audio 204 sont un changement de position du doigt sur l'écran suivant des instructions prédéterminées comprises dans une zone 2013.1 de la mémoire 2013 du dispositif 201 ou dans la mémoire du serveur 203, lesdites données non audio 204 seront transmises durant un temps D1, puis le dispositif 202 filtre les données reçues en restituant à l'utilisateur uniquement la pression qu'exerce l'utilisateur du dispositif 201 sur l'écran avec son doigt sans restituer le mouvement effectué par le doigt.

Lorsque la communication renforcée est considérée comme établie, selon un mode de réalisation, le premier dispositif 201 peut acquérir et transmettre des données d'un type parmi au moins un type suivant : une ou des images, des données vocales, ou du texte par exemple.

Selon un autre mode de réalisation, la communication renforcée est considérée comme établie si les étapes d'acquisition 102, transmission 103 et restitution 105 de données 4 non audio sont réalisées simultanément par les deux dispositifs 201 et 202 et si l'évolution des données 4 non audio correspondent schéma prédéterminé pendant une durée prédéterminée supérieure ou égale à 10 secondes et, de préférence, inférieure à 60 secondes, les schémas prédéterminés étant cités précédemment. Lorsque la communication renforcée est considérée comme établie dans ce mode de réalisation, les deux dispositifs 201 et 202 peuvent transmettre et recevoir des images des données vocales ou du texte par exemple.

Selon le mode de réalisation dans lequel le système 200 comprend une pluralité de N dispositifs mobiles utilisés chacun par un utilisateur, la communication est considérée comme établie si les étapes d'acquisition 102, transmission 103 et restitution 105 de données 4 non audio sont réalisées simultanément par la pluralité de N dispositifs et si l'évolution des données 4 non audio correspondent schéma prédéterminé pendant une durée prédéterminée supérieure ou égale à 10 secondes et, de préférence, inférieure à 60 secondes, les schémas prédéterminés étant cités précédemment Lorsque la communication renforcée est considérée comme établie dans ce mode de réalisation, la pluralité des N dispositifs peut transmettre et recevoir des images, des données vocales ou du texte par exemple.

## Revendications

1. Procédé (100) d'établissement d'une communication renforcée entre un premier dispositif (201) d'un premier utilisateur et un deuxième dispositif (202) d'un deuxième utilisateur**,** comportant les étapes suivantes :
- Etablissement (101) d'un canal bidirectionnel d'échange de données entre le premier dispositif (201) et le deuxième dispositif (202) ;
- Acquisition (102) en continu, par le premier dispositif (201), données (204) non-audio relatives à une action du premier utilisateur ;
- Transmission (103) en continu, par le premier dispositif (201) au deuxième dispositif (202), des données (204) acquises par ledit premier dispositif
- Restitution (104), par le deuxième dispositif (202), au deuxième utilisateur des données (204) transmises en fonction de l'évolution des données (204) ;
le procédé étant tel que la communication est considérée comme établie si l'évolution des données (204) restituées au deuxième utilisateur correspond à un schéma prédéterminé pendant une durée prédéterminée dite durée d'établissement, la durée d'établissement étant supérieure ou égale à 10 secondes de sorte à ce que le premier utilisateur ait fait preuve d'une attention plus importante que pour une communication instantanée.

2. Procédé (100) selon la revendication précédente tel que l'établissement de communication entre les deux dispositifs (201,202) est interrompu si le schéma prédéterminé est interrompu.

3. Procédé (100) selon la revendication 1 tel que l'établissement de communication entre les deux dispositifs (201,202) est interrompu si le schéma prédéterminé est interrompu pendant une durée prédéterminée dite durée d'interruption.

4. Procédé (100) selon la revendication précédente tel que si la durée de l'interruption du schéma est inférieure à la durée dite d'interruption alors l'établissement de la communication reprend.

5. Procédé (100) selon l'une quelconques des revendications précédentes tel que lorsque la communication renforcée est établie l'utilisateur du premier dispositif 201 de communication transmet des données parmi le type formé d'au moins un des types suivants : image, texte, son.

6. Procédé (100) selon l'une quelconque des revendications précédentes tel que l'acquisition (102), la transmission (103) et la restitution (104) des données non audio (204) sont effectuées par les deux dispositifs (201,202) et en ce que la communication renforcée est considérée comme établie si l'évolution des données non audio (204) reçues par les deux dispositifs (201,202) correspond au schéma prédéterminé pendant la durée d'établissement.

7. Procédé (100) selon l'une quelconques des revendications précédentes tel que les données (204) acquises en continu sont d'au moins un type appartenant à l'ensemble comprenant les éléments suivants :
- Données vidéos, le schéma prédéterminé correspondant à un mouvement anatomique ;
- Données issues d'un accéléromètre, le schéma prédéterminé correspondant à un déplacement du dispositif acquérant les données suivant au moins un axe défini ;
- Données relatives à un contact sur un écran compris dans le dispositif acquérant les données et le schéma prédéfini étant une évolution du contact, l'évolution se mesurant en pression et/ou localisation.

8. Procédé selon l'une quelconques des revendications précédentes tel que la durée d'établissement est comprise dans l'intervalle dix à soixante secondes.

9. Procédé (100) selon l'une quelconques des revendications précédentes tel que le canal d'échange de données bidirectionnel entre les deux dispositifs (201,202) est établi via un troisième dispositif (203).

10. Procédé (100) selon l'une quelconques des revendications précédentes tel que la communication entre les deux dispositifs (201,202) est établie à travers le réseau internet.

11. Procédé (100) selon l'une quelconques des revendications précédentes tel que le canal d'échange de données bidirectionnel entre le premier dispositif (201) et le deuxième dispositif (202) est établi selon le protocole applicatif WebSocket^{®}.

12. Système (200) tel qu'il comprend au moins un premier dispositif (201) et un deuxième dispositif (202) configurés pour mettre en œuvre le procédé (100) selon l'une quelconques des revendications précédentes.

13. Système (200) selon la revendication précédente tel qu'il comprend un troisième dispositif (203) configuré pour établir le canal bidirectionnel entre le premier dispositif (201) et le deuxième dispositif (202).

14. Produit-programme d'ordinateur comprenant des instructions qui, lorsque le programme est exécuté par un premier dispositif et un deuxième dispositif, conduisent ceux-ci mettre en œuvre les étapes du procédé (100) selon l'une quelconque des revendications 1 à 8.

## Patentansprüche

1. Verfahren (100) zum Aufbau einer verstärkten Kommunikation zwischen einem ersten Gerät (201) eines ersten Benutzers und einem zweiten Gerät (202) eines zweiten Benutzers, das die folgenden Schritte umfasst:
- Einrichten (101) eines bidirektionalen Kanals für den Datenaustausch zwischen dem ersten Gerät (201) und dem zweiten Gerät (202);
- Kontinuierliches Erfassen (102) von Nicht-Audio-Daten (204), die sich auf eine Handlung des ersten Benutzers beziehen, durch das erste Gerät (201);
- Kontinuierliches Übertragen (103) der vom ersten Gerät (201) erfassten Daten (204) vom ersten Gerät (201) zum zweiten Gerät (202);
- Wiedergabe (104) durch das zweite Gerät (202) der in Abhängigkeit von der Entwicklung der Daten (204) übertragenen Daten (204) an den zweiten Benutzer;
wobei das Verfahren so beschaffen ist, dass die Kommunikation als hergestellt gilt, wenn die Entwicklung der dem zweiten Benutzer wiedergegebenen Daten (204) während einer vorbestimmten Dauer, die Aufbaudauer genannt wird, einem vorbestimmten Schema entspricht, wobei die Aufbaudauer größer oder gleich 10 Sekunden ist, so dass der erste Benutzer eine größere Aufmerksamkeit als bei einer Sofortkommunikation gezeigt hat.

2. Verfahren (100) nach dem vorhergehenden Anspruch, derart, dass der Aufbau der Kommunikation zwischen den beiden Geräten (201, 202) unterbrochen wird, wenn das vorbestimmte Schema unterbrochen wird.

3. Verfahren (100) nach Anspruch 1, derart, dass der Aufbau der Kommunikation zwischen den beiden Geräten (201, 202) unterbrochen wird, wenn das vorbestimmte Schema für eine vorbestimmte Dauer, die als Unterbrechungsdauer bezeichnet wird, unterbrochen wird.

4. Verfahren (100) nach dem vorhergehenden Anspruch, derart, dass, wenn die Unterbrechungsdauer des Schemas kürzer als die Unterbrechungsdauer ist, der Aufbau der Kommunikation wieder aufgenommen wird.

5. Verfahren (100) nach einem der vorhergehenden Ansprüche, derart, dass, wenn die verstärkte Kommunikation hergestellt ist, der Benutzer des ersten Kommunikationsgeräts 201 Daten aus mindestens einem der folgenden Typen überträgt: Bild, Text, Ton.

6. Verfahren (100) nach einem der vorhergehenden Ansprüche, derart, dass die Erfassung (102), die Übertragung (103) und die Wiedergabe (104) der Nicht-Audio-Daten (204) durch die beiden Geräte (201, 202) durchgeführt werden, und dass die verstärkte Kommunikation als hergestellt gilt, wenn die Entwicklung der von beiden Geräten (201, 202) empfangenen Nicht-Audio-Daten (204) während der Aufbaudauer dem vorbestimmten Schema entspricht.

7. Verfahren (100) nach einem der vorhergehenden Ansprüche, derart, dass die kontinuierlich erfassten Daten (204) von mindestens einem Typ sind, der zu der Gruppe gehört, die die folgenden Elemente umfasst:
- Videodaten, wobei das vorbestimmte Schema einer anatomischen Bewegung entspricht;
- Daten, die von einem Beschleunigungsmesser stammen, wobei das vorbestimmte Schema einer Bewegung des Geräts entspricht, das die Daten entlang mindestens einer definierten Achse erfasst;
- Daten über einen Kontakt auf einem Bildschirm, der im Gerät enthalten ist, das die Daten erfasst, und wobei das vordefinierte Schema eine Entwicklung des Kontakts ist, wobei die Entwicklung als Druck und/oder Lokalisierung gemessen wird.

8. Verfahren nach einem der vorhergehenden Ansprüche, derart, dass die Aufbaudauer im Bereich von zehn bis sechzig Sekunden liegt.

9. Verfahren (100) nach einem der vorhergehenden Ansprüche, derart, dass der bidirektionale Datenaustauschkanal zwischen den beiden Geräten (201, 202) über ein drittes Gerät (203) hergestellt wird.

10. Verfahren (100) nach einem der vorhergehenden Ansprüche, derart, dass die Kommunikation zwischen den beiden Geräten (201, 202) über das Internet hergestellt wird.

11. Verfahren (100) nach einem der vorhergehenden Ansprüche, derart, dass der bidirektionale Datenaustauschkanal zwischen dem ersten Gerät (201) und dem zweiten Gerät (202) gemäß dem WebSocket^{®}-Anwendungsprotokoll hergestellt wird.

12. System (200), derart, dass es mindestens ein erstes Gerät (201) und ein zweites Gerät (202) umfasst, die so beschaffen sind, dass sie das Verfahren (100) gemäß einem der vorhergehenden Ansprüche durchführen.

13. System (200) nach dem vorhergehenden Anspruch, **dadurch gekennzeichnet, dass** es ein drittes Gerät (203) umfasst, das so beschaffen ist, dass es den bidirektionalen Kanal zwischen dem ersten Gerät (201) und dem zweiten Gerät (202) herstellt.

14. Computerprogrammprodukt mit Anweisungen, die, wenn das Programm von einem ersten Gerät und einem zweiten Gerät ausgeführt wird, diese dazu veranlassen, die Schritte des Verfahrens (100) nach einem der Ansprüche 1 bis 8 auszuführen.

## Claims

1. A method (100) for establishing enhanced communication between a first device (201) of a first user and a second device (202) of a second user, including the following steps of:
- Establishing (101) a bidirectional data exchange channel between the first device (201) and the second device (202);
- Continuously acquiring (102), by the first device (201), non-audio data (204) relating to an action of the first user;
- Continuously transmitting (103), by the first device (201) to the second device (202), the data (204) acquired by said first device ;
- Returning (104), by the second device (202), the transmitted data (204) to the second user as a function of the time course of the data (204);
The method being such that the communication is considered to be established if the time course of the data (204) returned to the second user corresponds to a predetermined scheme for a predetermined period of time referred to as the establishment period of time, the establishment period of time being greater than or equal to 10 seconds such that first user has paid more attention than for instant communication.

2. The method (100) according to the preceding claim wherein establishing communication between both devices (201, 202) is interrupted if the predetermined scheme is interrupted.

3. The method (100) according to claim 1 wherein establishing communication between both devices (201, 202) is interrupted if the predetermined scheme is interrupted for a predetermined period of time referred to as the interruption period of time.

4. The method (100) according to the preceding claim wherein if the period of time of the interruption of the scheme is less than the so-called interruption period of time, then the establishment of the communication resumes.

5. The method (100) according to any of the preceding claims, wherein when the enhanced communication is established, the user of the first communication device 201 transmits data of the type formed by at least one of the following types: image, text, sound.

6. The method (100) according to any of the preceding claims, wherein acquiring (102), transmitting (103) and returning (104) the non-audio data (204) are carried out by both devices (201, 202) and in that the enhanced communication is considered to be established if the time course of the non-audio data (204) received by both devices (201, 202) corresponds to the predetermined scheme during the establishment period of time.

7. The method (100) according to any of the preceding claims, wherein the continuously acquired data (204) are of at least one type belonging to the set comprising the following elements:
- Video data, the predetermined scheme corresponding to an anatomical movement;
- Data from an accelerometer, the predetermined scheme corresponding to a movement of the device acquiring data along at least one defined axis;
- Data relating to a contact on a screen included in the devices acquiring data and the predefined scheme being a time course of the contact, the time course being measured in pressure and/or location.

8. The method according to any of the preceding claims, wherein the establishment period of time is in the range of ten to sixty seconds.

9. The method (100) according to any of the preceding claims, wherein the bidirectional data exchange channel between both devices (201, 202) is established via a third device (203).

10. The method (100) according to any of the preceding claims, wherein the communication between both devices (201,202) is established via the internet network.

11. The method (100) according to any of the preceding claims, wherein the bidirectional data exchange channel between the first device (201) and the second device (202) is established according to the WebSocket^{®} application protocol.

12. A system (200) comprising at least a first device (201) and a second device (202) configured to implement the method (100) according to any of the preceding claims.

13. The system (200) according to the preceding claim, comprising a third device (203) configured to establish the bidirectional channel between the first device (201) and the second device (202).

14. A computer program product comprising instructions which, when the program is executed by a first device and a second device, cause the same to implement the steps of the method (100) according to any of claims 1 to 8.
